Europäisches Patentamt

European Patent Office

Office européen des brevets

(11) Publication number: **0 511 444 A2**

# EUROPEAN PATENT APPLICATION

(21) Application number: **91306243.6**

(22) Date of filing: **10.07.91**

(51) Int. Cl.5: **F16K 1/30**

(30) Priority: **30.04.91 US 693820**

(43) Date of publication of application:
**04.11.92 Bulletin 92/45**

(84) Designated Contracting States:
**AT BE CH DE DK ES FR GB GR IT LI LU NL SE**

(71) Applicant: **Circle Seal Controls, Inc.**
**1111 North Brookhurst, Box 3666**
**Anaheim, California 92803(US)**

(72) Inventor: **Geuy,Timothy R**
**6516 East Carnegie Ave, Anaheim**
**California 92807(US)**
Inventor: **Nguyen,David C**
**9835 Continental Drive, Huntingdon Drive**
**California 92646(US)**

(74) Representative: **Lord, Hilton David**
**Marks & Clerk 57-60 Lincoln's Inn Fields**
**London WC2A 3LS(GB)**

(54) **Regulating shut off valve.**

(57) The present invention relates to a valve for high pressure containers which can regulate the flow of gas at or above a given pressure so that equipment designed for lower pressure containers can be used safely, wherein use is made of a poppet assembly, the poppet being fixed by manual adjustment, but wherein the valve seating acts against an internal piston which is also acted on by pressure in the valve, such that when the internal pressure reaches a predetermined level, the seating engages the poppet to close the valve.

FIG.I.

The present invention relates to valves for high pressure containers, especially those that contain gases.

High pressure gas bottles normally come with a screw type shut off valve installed in the top thereof so that after being charged with gas, the bottle can be sealed and shipped to a customer. Since the bottle is relatively heavy to withstand high gaseous pressure therewithin, should the bottle get loose, the shut off valve could very easily be knocked off, allowing the gas to violently escape, at which time the bottle can act like a rocket expending gas energy through its mouth and moving dangerously. Therefore it is common practice to provide a robust protective cap to cover shut off valves when bottles, containing gas under pressure, are being moved or shipped. Such caps screw onto the bottle, surrounding and protecting the shut off valve from harm.

Recently higher pressure gas bottles have become available that allow higher volumes of gas to be stored therewithin. However, many systems and components thereof such as regulators, valves, and other items, exist that were designed for attachment to older, lower pressure supplies. Therefore, if higher pressure bottles are to be universally used, some means must be provided to assure that in no instance can gas be delivered at more than the prior maximum pressure, since such might cause some connected systems to fail, become inoperative, or explode.

Therefore, there is a need to provide a shut off valve for a gas storage bottle that includes regulation means to prevent delivery of gas therefrom above a pre-determined pressure. Such valve must be able to fit underneath a standard protective cap when installed on a gas bottle.

It has now been discovered that it is possible to provide such a valve by the use of a poppet assembly, wherein the poppet is fixed by manual adjustment, but wherein the valve seating acts against an internal piston which is also acted on by pressure in the valve, such that when the internal pressure reaches a predetermined level, the seating engages the poppet to close the valve.

Such valves allow the use of modern storage bottles containing gas at high pressure therein with older, lower pressure systems by preventing more than a predetermined pressure to be present at the outlet thereof.

Thus, in a first aspect, the present invention provides a poppet valve for a pressurised storage container, the valve having an inlet and an outlet, the poppet being cooperable with a valve seating located between inlet and outlet to control the flow of the pressurised contents, preferably gas, of the container, the position of the poppet within the valve being determined by external manipulation, characterised in that the valve seating is provided with means to bias it toward the poppet and a more strongly biassed piston is provided which acts against the seating, thereby to retain the seating in a resting position, the piston being exposed to any pressure generated in the valve such that the pressure will act against the bias of the piston, thereby to reduce the differential between the biasses of the seating and piston so that, at a given pressure, the seating will move toward the poppet and close the valve.

The poppet assembly will generally comprise a pin and a barrel. The barrel is located within the body of the valve, and will usually be directly connected to a screw thread cooperating with an inner wall of the body, or with a retainer mounted in the body. Turning the screw either way will then propel the barrel into the body or extract it.

The pin may be formed integrally with the barrel or, more preferably, separately therefrom. Thus, when the barrel is pushed into the body, the pin will be pushed into contact with the seating, thereby closing the valve. Extraction of the barrel allows (where the pin and barrel are separate) the pressure of the container to push the pin away from the seating to open the valve.

The piston may operate from any direction on the seating, provided that when the pressure in the valve reaches a certain level, it is propelled away from the seating, to allow the seating to contact the pin.

It is preferred that the piston be in line with the pin, to avoid any problems associated with balancing pressures on the seating. A piston acting coaxially with the seating is the simplest, and will be coaxial with the pin.

The piston may be of any general shape, but it is preferred that it is a regular polyhedron, or circular, from the standpoint of engineering. It is preferred that it is mounted flush within the body of the valve, and that it has a conduit therethrough for the passage of the pin, the pin being flush with the piston.

The piston may act directly on the seating, but this is not preferable, as this may leave little surface for the pressure of the container to act on. Instead, it is preferred that the piston act on the seating by means of one or more, preferably three or more, arms. The space between the arms can then be subject to pressure in the valve.

The effect of pressure on the piston can be enhanced by having a chamber between the inlet and outlet, and having the piston fit flush within the chamber. In one embodiment, the piston acts on the seating via a tube acting on the wall of the seating, one or more holes being provided in the tube to allow pressure to act on the piston via the chamber. Thus, the surface of the piston is considerably increased, making the bias required for the piston more easy to calculate, as the tolerance will be increased.

Bias on the piston may suitably be provided by a spring mechanism located above the piston and below the retainer through which the handle of the barrel passes. In the present case, the force required to be exerted by the spring will usually be quite considerable, and may usefully be applied in the form of Bellville washers, although other suitable springs will be apparent to those skilled in the art.

It is not usually desirable to have the spring act directly on the piston but, rather, via a spring seating. A suitable upper surface interacts with the spring while the lower surface of the seating acts on the piston. A suitable conformation is where the top of the piston is dome shaped and the bottom of the seating is hollowed to receive the dome.

The bias on the valve seating may be any suitable. All that is required is for the bias to cause movement toward the pin when the pressure from the piston is relieved. In the resting position, the seating will usually be resting against the wall of the chamber, or some suitable abutment.

The valve seating member will generally be provided with a tubular portion away from the pin which extends flush into the body of the valve. Gas passes through the tube and out through the seating.

Behind the tubular portion is ideally located a filter, to prevent any larger contaminants in the container blocking the valve mechanism. This may usefully be pop-fitted into a conical recess forming part of the inlet.

In general, in all cases where there is a moving part, an O-ring, and preferably a back-up O-ring, should be fitted. In particular, O-rings should be fitted around the tubular part of the valve seating, the piston, and the pin. Others may be fitted as required or desired. It will be appreciated that O-rings are not essential, but are useful to prevent escape of gas. Means other than O-rings may be employed if desired, and such will be apparent to those skilled in the art.

The pressure at which the valve cuts off or regulates gas flow will largely be determined by the bias on the piston, although the bias on the valve seating, if relatively strong, may play some part, and the extent to which the barrel is withdrawn from the valve will also play a part. The required adjustments may easily be made by those skilled in the art.

The present regulating shut off valve provides means for automatically regulating the output pressure of a high pressure gas storage bottle to remain below a predetermined pressure as well as providing manual means to prevent any flow out of the bottle. The valve includes a screw poppet assembly having a needle on an end thereof for selectable sealing engagement with a facing valve seat. The valve seat is forcibly retained in a normal position against an abutment surface in a direction away from the needle by a heavy spring means. A piston, having a pre-determined area, is exposed to system pressure and is also held in place by the heavy spring means. When system pressure begins to reach the predetermined limit, the piston compresses the spring means, allowing the valve seat to move against the needle to reduce the flow therethrough until all flow from the gas supply bottle to which the valve is connected is shut off. In this manner, the system pressure can never exceed a pre-determined safe level. When it is desired to manually close the valve, the poppet assembly is rotated until the needle thereof comes into sealing engagement with the valve seat. The inlet to the valve includes a filter since gas bottles are re-used many times and are notoriously dirty. This prevents dirt from interfering with the proper operation of the needle and valve seat.

In general, the present invention provides a regulating shut off valve for a high pressure gas bottle useful when the pressure within the bottle can be higher than the maximum safe working pressure of a pneumatic system connected thereto. The valve is sized to fit under a standard protective cap when installed on a gas bottle. The valve includes a poppet assembly with a needle that acts with a valve seat so that the poppet assembly can be screwed open to allow gas to pass from the bottle to the system or screwed closed against the seat. The valve seat, which is operatively connected to a spring loaded piston to which system pressure is applied, is responsive to the maximum safe working pressure of the system. When such pressure is present, the valve seat moves against the needle to regulate flow.

In an alternative aspect, the present invention provides a valve for a high pressure gas storage bottle that automatically regulates output pressure to stay below a predetermined limit above ambient pressure and provides for manual shut off including:
a valve body having:
    an inlet;
    an outlet; and
    a chamber between the inlet and outlet;
    a poppet assembly engaged to the body and extending into the chamber;
    valve seat means located in the chamber in position to engage the poppet assembly and restrict flow from the inlet to the outlet through the chamber, the valve seat means including:
    means responsive to pressure at the outlet which allow the valve seat means to move against the poppet assembly when the predetermined pressure limit has been reached; and

manual means to move the poppet assembly against the valve seat means to shut off flow from the inlet to the outlet.

Preferably, the means responsive to pressure include: a piston having:

a surface exposed to outlet pressure that tends to move the piston in a first direction; and

means operatively connecting the piston to the valve seat means so that the valve seat means tend to move with the piston in the first direction toward the poppet assembly; and

spring means urging the piston in a second opposite direction to resist outlet pressure applied to the piston surface exposed to outlet pressure.

Preferably, the means operatively connecting the piston to the valve seat means include at least one arm that extends from the piston to the valve seat means, and advantageously further includes a valve seat spring capable of producing substantially less force than the spring means, the valve seat spring being positioned to urge the valve seat means toward the at least one arm.

The valve seat spring is generally compressed between the valve seat means and the valve body.

Preferably, the valve seat means further include:

a surface area exposed to inlet pressure sized so that when the valve seat means is exposed to maximum possible differential pressure between inlet pressure and outlet pressure, the surface area produces force urging the valve seat means to move toward the at least one arm that is substantially less force than the force produced by the spring means.

Preferably, the poppet assembly includes:

a needle having:

a conical end for engagement with the valve seat means; and

a cylindrical portion; and

a stem adapted for threadable engagement with the valve body, the manual means being connected to the stem to twist the stem, thereby moving it and the conical end of the needle toward the valve seat means.

Advantageously, the stem includes:

a stem radial abutment surface, and wherein the needle includes:

a radial abutment surface facing the stem radial abutment surface and being exposed to ambient pressure, whereby when in operation, pressure at the outlet higher than ambient pressure causes the radial abutment surface of the needle to remain in contact with the stem radial abutment surface.

It is preferred that the piston further includes:

a cylindrically shaped portion;

a bore therethrough concentric to the cylindrically shaped portion, the cylindrical portion of the needle being positioned within the bore for gas sealed sliding contact therewith.

The valve body ideally further includes:

an interior cylindrical surface in which the piston is positioned for gas sealed sliding; and

a radial shelf positioned for contact with the surface of the piston exposed to outlet pressure to restrict sliding movement of the piston in the second direction.

The piston usefully further includes:

a hemi-spherical surface on the opposite side thereof from the surface exposed to outlet pressure, and wherein the spring means include:

a plurality of Bellville washers positioned in series; and

a disk member having:

a radial surface in contact with one of the Bellville washers to transfer force therebetween; and

a concave spherical surface in contact with the hemi-spherical surface of the piston to transfer force thereto from the Bellville washers.

A filter positioned in the inlet helps prevent clogging of the valve with dirt.

In a preferred embodiment, there is provided a regulating shut-off valve for high pressure gas storage bottles including:

a valve body assembly having:

an inlet;

an outlet; and

a chamber between the inlet and outlet;

a poppet assembly engaged to the valve body assembly and extending into the chamber; and

valve seat means located in the chamber in position to engage with the poppet assembly to restrict flow from the inlet to the outlet through the chamber, the valve seat means including:

a seat member; and

means responsive to pressure at the outlet which allow the seat member to move against the poppet assembly when a predetermined pressure at the outlet has been reached.

In such a valve, the means responsive to pressure preferably include:

a movable member having:

a surface exposed to outlet pressure that tends to move the movable member in a first direction; and

means operatively connecting the movable member to the seat member so that the seat member tends to move with the movable member in the first direction toward the poppet assembly; and

spring means urging the movable member in a second opposite direction to resist outlet pressure applied to the movable member surface exposed to outlet pressure.

The means operatively connecting the movable member to the seat member preferably include at least one portion that extends from the movable member to the seat member and, usefully, a seat spring capable of producing substantially less force than the spring means, the seat spring being positioned to urge the seat member toward the at least one portion.

The seat spring will usually be held in a compressed condition between the seat member and the valve body assembly.

The means operatively connecting the movable member to the seat member preferably further include:

a first area exposed to inlet pressure; and

a second area exposed to outlet pressure, the first area being larger than the second area, the difference therebetween being sized so that when the seat member is exposed to maximum possible differential pressure between inlet pressure and outlet pressure, the difference in area between the first and second areas producing substantially less force urging the seat member to move toward the at least one portion than the spring means produces in the opposite direction.

In a preferred embodiment, the poppet assembly includes:

a piston having:

a surface exposed to outlet pressure that tends to move the piston in a first direction; and

means operatively connecting the piston to the seat member so that the seat member tends to move with the piston in the first direction toward the poppet assembly;

spring means urging the piston in a second opposite direction to resist outlet pressure applied to the piston surface exposed to outlet pressure;

a needle having:

a conical end for engagement with the seat member; and

a cylindrical portion; and

a stem adapted for threadable engagement with the valve body assembly, wherein the piston further includes:

a cylindrically shaped portion; and

a bore therethrough concentric to the cylindrically shaped portion, the cylindrical portion of the needle being positioned within the bore for gas sealed sliding contact therewith.

Preferably, the poppet assembly further includes: a stem which threadably engages the valve body assembly, the stem including:

a stem radial abutment surface, and wherein the needle includes:

a radial abutment surface facing the stem radial abutment surface and being exposed to ambient pressure, whereby when in operation, pressure at the outlet higher than ambient pressure causes the radial abutment surface of the needle to remain in contact with the stem radial abutment surface.

It is preferred that the piston further includes:

a hemi-spherical surface on the opposite side thereof from the surface exposed to outlet pressure, and wherein the spring means include:

a plurality of Bellville washers positioned in series; and

a disk member having:

a radial surface in contact with one of the Bellville washers to transfer force therebetween; and

a concave spherical surface in contact with the hemi-spherical surface of the piston to transfer force thereto from the Bellville washers.

Thus, the present invention allows a regulating shut off valve for high pressure gas bottles to be provided. Further, the valves of the invention have a small physical envelope.

The valves of the invention can be so regulated as to prevent release of gas at greater than a single pre-determined pressure, and can be constructed relatively economically and at high rates of production.

The invention also allows the provision of greater volumes of gas supply to a pre-existing system, in a pre-existing storage space, by allowing higher pressure gas supply bottles to be connected thereto.

The present invention will now be further illustrated with respect to the accompanying drawings, in which:

Figure 1 is an elevational view of the valve of the present invention installed in a gas supply bottle, which is shown in broken cross section;

Figure 2 is a cross-sectional view of the valve of Figure 1 in its closed condition;

Figure 3 is a cross-sectional view similar to Figure 2, with the valve in its full open position; and

Figure 4 is a cross-sectional view similar to Figures 2 and 3, with the valve in its full regulating position, cutting off flow.

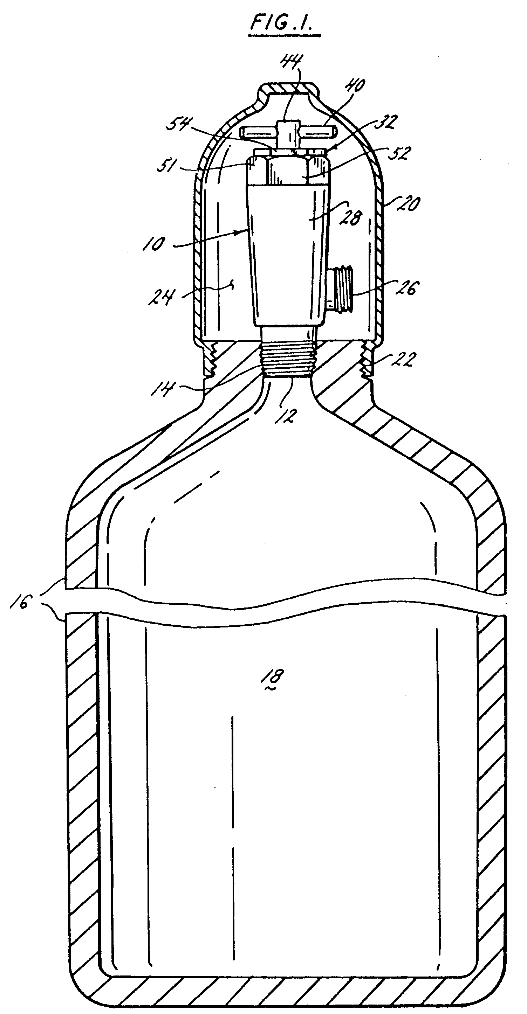

Referring to the drawings, more particularly by reference numbers, number 10 in Figure 1 refers to a valve constructed according to the present invention. The valve 10 is shown with its inlet 12 threadably connected in the mouth 14 of a high pressure gas bottle 16 whose interior 18 normally contains high pressure gas. The bottle 16 is shown with its robust protective cap 20 threadably connected to the outer lip 22 of the mouth 14 of the bottle 16. Such robust protective caps 20 are standard items on high pressure gas bottles 16 and are used to protect the shut off valves normally connected thereto. The interior 24 of the cap 20 is relatively small and of standard size so that little room is therewithin for additional mechanism when it is desired to provide regulation as well as means to shut off the flow from the bottle 16 through the outlet 26 of the valve 10.

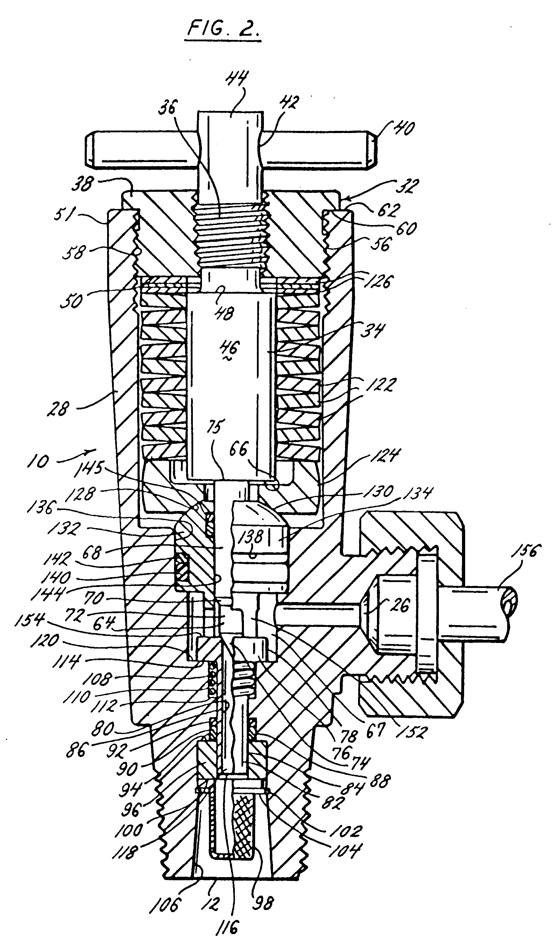

The valve 10 includes a body 28 on which the inlet 12 and the outlet 26 are integrally formed. As shown in Figure 2, the valve 10 also includes a poppet assembly 32 that includes a stem 34 having a threaded portion 36 that threadably engages a retainer 38. The retainer 38 is assembled with the stem 34 and then a handle 40 is permanently affixed through a hole 42 in the outer end portion 44 of the stem 34. The stem 34 has a barrel portion 46 opposite the threaded portion 36 from the outer end portion 44 that includes an abutment shoulder 48 thereon for engagement with an inner radial surface 50 of the retainer 38. In this manner the stem 34 and the retainer 38 are permanently connected together during assembly so that the stem 34 cannot be unscrewed therefrom.

As shown in Figure 1, both the retainer 38 and the outer hexagonal surface 51 of the retainer include wrench flats 52 and 54 respectively for use in assembly. The retainer 38 also includes threads 56 adjacent the hexagonal surface 51 that engage interior threads 58 of the body 28 for threaded engagement there between. The wrench flats 52 and 54 allow the retainer 38 to be tightly threadably connected so that a radial abutment surface 60 thereof comes into firm engagement with a facing shelf 62 of the body 28.

The poppet assembly 32 includes a poppet valve needle 64 positioned opposite from the outer end 44. The needle 64 extends from an inner radial abutment surface 66 of the barrel portion 46 into the regulating chamber 67 formed between the inlet 12 and outlet 26. The needle 64 includes a first cylindrical portion 68 connected by a conical portion 70 to a second cylindrical portion 72 of smaller diameter, which in turn connects to a conical portion 74 that forms one mating surface used to shut off flow through the valve 10. Although the needle 64 may be integral with the barrel portion 46, such imposes concentricity requirements on the machining thereof. Therefore, the poppet assembly 32 preferably is manufactured with the body portions 46 and the needle 64 in separate pieces. The back radial surface 75 of the needle 64 is held against the inner abutment surface 66 by the gas pressure at all times the valve 10 is in operation.

The valve 10 is shown in its closed position in Figure 2 with the needle 64 in engagement with a valve seat 76. The seat 76 has a robust, ring shaped seat portion 78 with a bore 80 formed therethrough. The seat 76 also includes a long tubular portion 82 whose outer surface 84 slides in an inner bore 86 formed in the body 28. A recess 88 is provided in the bore 86 for receipt of an O-ring 90 and a back up ring 92 to seal the sliding contact between the outer surface 84 of the tubular portion 82 and the inner bore 86 of the body 28. The O-ring 90 and back up ring 92 are held in the recess 88 by the inner radial surface 94 of a bushing 96. A screen type filter 98 is held against an outer radial surface 100 of the bushing 96 by a snap ring 102 positioned in a groove 104 in the tapered inlet bore 106 of the body 28. The snap ring 102 also holds the bushing 96 in the position shown. All gas passing through the inlet 12 must pass through the filter 98 before flowing through the bore 80 of the valve seat 76. This assures that dirt or other debris does not reach the valve seat 76 and cause malfunction of the valve 10.

A relatively light compression spring 108 is positioned in a cylindrical recess 110, trapped between a radial surface 112, where the cylindrical recess 110 relieves the inner bore 86 of the body 28, and an underside radial surface 114 of the seat portion 78 of the valve seat 76. Although the seat 76 is slightly unbalanced to move toward the poppet assembly 32, due to the area of a small radial surface 116 at the outer end 118, the spring 108 assures that the seat 76 will move away from a radial abutment surface 120 on which the outer radial surface 114 of the seat portion 78 normally rests, when not forced thereagainst.

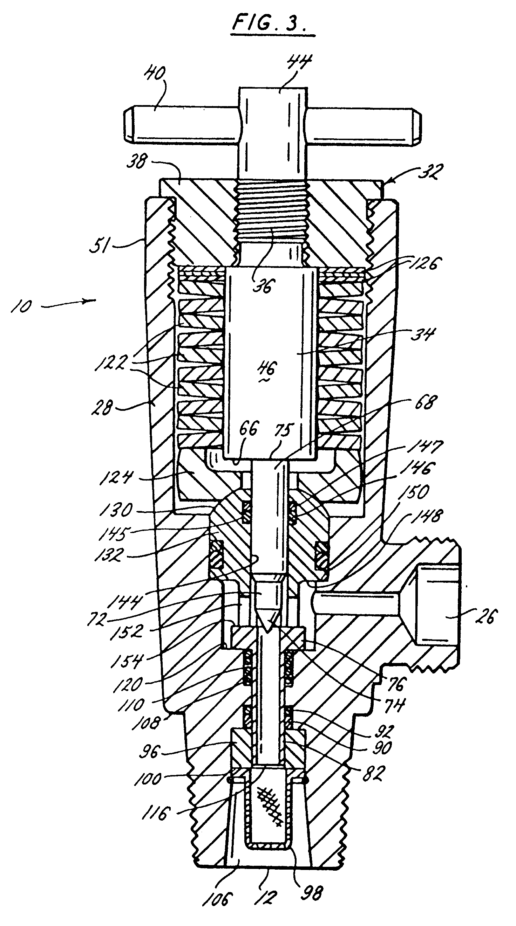

The seat 76 normally is held adjacent the radial abutment surface 120 by heavy spring means embodied by a plurality of series connected Bellville washers 122. The washers 122 are bounded by the radial surface 50 of the retainer 38 and a spring seat member 124. As shown, shims 126 may be positioned between the washers 122 and the radial surface 50 to adjust the spacing and hence the force created by the washers 122, which in turn adjusts the regulating pressure of the valve 10. The spring seat member 124 has an inner concave surface 128 that bears on a spherical abutment surface 130 of a piston 132. The piston 132 has an outer cylindrical surface 134 that slides in a cylinder 136 formed in the interior of the body 28. The outer cylindrical surface 134 of the piston 132 includes a seal recess 138 for an O-ring 140 and a back up ring 142 there behind. The O-ring 140 prevents leakage of gas between the piston 132 and the cylinder 136. The piston 132 further includes a central cylindrical bore 144 through which the cylindrical portion 68 of the needle 64 can slide. The bore 144 also includes a recess 145 in which are positioned an O-ring 146 and back up ring 147 (Figure 3) to prevent leakage of gas between the bore 144 and the cylindrical portion 68 of the needle 64. Normally the piston 132 rests with its inner radial surface 148 held in contact with a radial shelf 150 in the valve body 28 by the force of the washers 122. The piston 132 includes legs 152 that extend to contact an inner radial surface 154 of the seat portion 78. In this manner, when as shown in Figure 3, the stem 34 is rotated to allow the conical surface 74 of the needle 64 to move away from the seat 76, the seat 76 is held in the position shown, by the force generated by the compressed Bellville washers 122.

However, when the pressure in the outlet 26 of the valve 10 begins to reach a pre-determined limit, as determined by the force created by the Bellville washers 122, the gas pressure acting on the radial surface 148 of the piston 132 overcomes the force of the Bellville washers 122 and moves the piston 132 toward the handle 40. This allows the seat 76, under the influence of spring 108, to move toward the needle 64 to regulate gas flow and pressure at the outlet 26 by closure of the passageway therebetween.

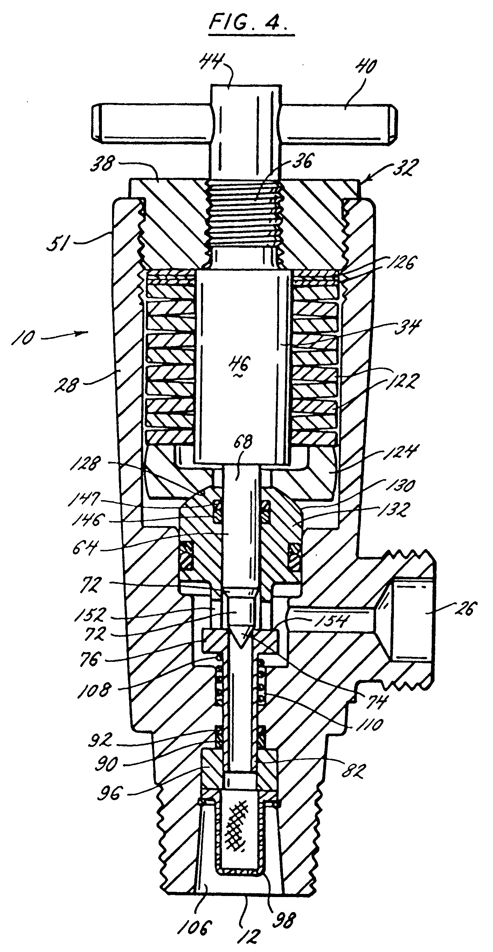

The position of the valve 10 shown in Figure 4 is that when the maximum safe pressure for the connected pneumatic system 156 is equalled and, therefore, the seat 76 has been allowed by movement of the piston 132 to move to totally close the flow passage within the valve 10 from inlet 12 to outlet 26. When the pressure in the system 156 is reduced, the valve seat 76 moves back to the position shown in Figure 3. When it is desired to shut off all gas flow through the valve 10, the handle 40 is turned until the stem 34 returns to the position shown in Figure 2, with the needle 64 in sealing contact with the seat 76 to prevent flow through the valve 10, no matter what the pressures at the inlet 12 and the outlet 26 thereof.

## Claims

1. A poppet valve for a pressurised storage container, the valve having an inlet and an outlet, the poppet being cooperable with a valve seating located between inlet and outlet to control the flow of the pressurised contents, preferably gas, of the container, the position of the poppet within the valve being determined by external manipulation (such as manually or mechanically), characterised in that the valve seating is provided with means to bias it toward the poppet and a more strongly biassed piston is provided which acts against the seating, thereby to retain the seating in a resting position, the piston being exposed to any pressure generated in the valve such that the pressure will act against the bias of the piston, thereby to reduce the differential between the biasses of the seating and piston so that, at a given pressure, the seating will move toward the poppet and close the valve.

2. A valve according to claim 1, wherein the poppet assembly comprises a pin and a barrel formed integrally or, preferably, separately.

3. A valve according to claim 2, wherein the piston is coaxial with the pin.

4. A valve according to claim 2 or 3, wherein the piston is mounted flush within the body of the valve, and has a conduit therethrough for the passage of the pin, the pin being flush with the piston.

5. A valve according to any preceding claim, wherein the piston acts on the seating by means of one or more, preferably three or more, arms.

6. A valve according to any preceding claim, wherein there is provided, between the inlet and outlet, a chamber, and wherein the piston fits flush within the chamber.

7. A valve according to any preceding claim, wherein bias on the piston is provided by Bellville washers.

8. A valve according to any preceding claim, wherein the bias on the piston is provided via a spring seating, preferably situated below the retainer through which the handle of the barrel passes, a suitable upper surface of the seating interacting with the spring and a lower surface acting on the piston, particularly where the top of the piston is dome shaped and the bottom of the seating is hollowed to receive the dome.

9. A valve according to any preceding claim, wherein the seating member is provided with a tubular portion away from the pin which extends flush into the body of the valve.

10. A valve according to any preceding claim, wherein a filter is located in the inlet.

11. A valve according to any preceding claim, wherein an O-ring, and preferably a back-up O-ring, is fitted about moving parts of the valve where pressurised gas could pass, such parts being particularly the tubular part of the valve seating, as defined in claim 9, the piston, and the pin, as defined in claim 2, or any claim dependent thereon.

12. A valve for a high pressure gas storage bottle that automatically regulates output pressure to stay below a predetermined limit above ambient pressure and provides for manual shut off including:
a valve body having:

an inlet;

an outlet; and

a chamber between said inlet and outlet;

a poppet assembly engaged to said body and extending into said chamber;

valve seat means located in said chamber in position to engage said poppet assembly and restrict flow from said inlet to said outlet through said chamber, said valve seat means including:

means responsive to pressure at said outlet which allow said valve seat means to move against said poppet assembly when the predetermined pressure limit has been reached; and

manual means to move said poppet assembly against said valve seat means to shut off flow from said inlet to said outlet,

said valve optionally further comprising any one or more suitable features as defined in any preceding claim, in any suitable combination.

## FIG.I.

FIG. 2.

FIG. 3.

## FIG. 4.